# FASCICULE DE BREVET EUROPEEN

(11) **EP 3 631 323 B1**
(45) Date de publication et mention de la délivrance du brevet: **16.06.2021**
(21) Numéro de dépôt: 18719975.7
(22) Date de dépôt: 13.04.2018
(51) Int. Cl.: F25B 15/06, F25B 43/00, B60H 1/32

(54) **DISPOSITIF DE COLLECTION DE LIQUIDE À ENCOMBREMENT RÉDUIT, POUR UNE INSTALLATION DE CLIMATISATION PAR ABSORPTION**
KOMPAKTE FLÜSSIGKEITSSAMMELVORRICHTUNG FÜR EINE ABSORPTIONSKLIMAANLAGE
REDUCED-BULK LIQUID COLLECTION DEVICE FOR AN ABSORPTION AIR CONDITIONING INSTALLATION

(30) Priorité: 24.05.2017 FR 1754591
(43) Date de publication de la demande: 08.04.2020
(73) Titulaire: PSA Automobiles SA, 78300 Poissy (FR)
(72) Inventeur: DERANLOT, Christophe, 78380 Bougival (FR); SAUVAGE SCHEMBRI, Bastien, 78125 Gazeran (FR); BOUYAUD, Muriel, 78114 Magny Les Hameaux (FR)
(86) Numéro de dépôt international: PCT/FR2018/050936
(87) Numéro de publication internationale: WO 2018/215708

(56) Documents cités:
- EP-A1- 2 213 963
- DE-A1- 3 239 426
- FR-A1- 2 951 255
- FR-A1- 2 951 256

## Description

L'invention concerne les installations de climatisation par absorption, et plus précisément les dispositifs de collection de liquide qui équipent les équipements d'absorption et/ou d'évaporation de telles installations.

On entend ici par « équipement d'évaporation et/ou d'absorption » aussi bien un équipement assurant seulement l'absorption, qu'un équipement assurant seulement l'évaporation, ou qu'un équipement comprenant une partie dédiée à l'absorption et une autre partie dédiée à l'évaporation.

Comme le sait l'homme de l'art, et comme cela est notamment décrit dans les documents brevet FR 2900721, FR 2941773 et FR 2900722, une installation de climatisation par absorption comprend notamment un évaporateur, un absorbeur, un concentrateur (ou « désorbeur ») et un condenseur.

L'évaporateur comprend un espace interne parcouru par un circuit de réfrigération (dans lequel circule un fluide tel que de l'eau), et dans lequel règne une très faible pression et est pulvérisé un réfrigérant dans un état liquide (par exemple de l'eau). Le réfrigérant liquide capte des calories au fluide de ce circuit de réfrigération afin de le refroidir, ce qui induit son évaporation partielle. En effet, une partie du réfrigérant liquide pulvérisé ne s'évapore pas et tombe dans le fond de l'évaporateur où elle est transférée par gravité dans un premier réservoir où elle est pompée (ou aspirée) par une première pompe chargée de la réinjecter (sous forme pulvérisée) dans l'évaporateur. La vapeur de réfrigérant créée dans l'évaporateur est transférée dans l'espace interne d'un absorbeur (éventuellement via un échangeur de chaleur chargé de la pré-refroidir).

Cet absorbeur contient une solution absorbante (comme par exemple du bromure de lithium (LiBr)) qui est chargée d'absorber la vapeur de réfrigérant formée dans l'évaporateur et ainsi de maintenir la très faible pression régnant dans ce dernier et nécessaire à la vaporisation du réfrigérant. De préférence, une partie de la solution absorbante contenue dans la partie inférieure de l'absorbeur est pompée (ou aspirée) par une autre pompe chargée de la réinjecter (sous forme pulvérisée) dans la partie supérieure de l'absorbeur. Plus la solution absorbante absorbe de la vapeur de réfrigérant, plus elle est diluée. Pour éviter qu'elle ne se sature, et donc qu'elle ne puisse plus absorber la vapeur de réfrigérant, elle est en partie transférée par gravité dans un second réservoir où elle est pompée (ou aspirée) par une seconde pompe chargée de l'injecter dans la partie supérieure de l'espace interne d'un concentrateur (ou désorbeur).

L'espace interne de ce concentrateur est parcouru par un circuit de chauffage (dans lequel circule un fluide chaud tel que de l'eau) qui est chargé de réchauffer la solution absorbante partiellement saturée. Ce réchauffage provoque une évaporation d'une partie du réfrigérant contenue dans la solution absorbante, ce qui induit la régénération de cette dernière. La solution absorbante régénérée est ensuite transférée vers la partie supérieure de l'espace interne de l'absorbeur, tandis que la vapeur de réfrigérant produite dans le concentrateur est transférée dans le condenseur, où elle est refroidie par un circuit de refroidissement pour reformer le réfrigérant liquide qui est ensuite transféré dans l'évaporateur, de préférence après passage dans un détendeur et éventuellement un échangeur de chaleur.

Le premier réservoir associé à l'évaporateur permet de garder un niveau de réfrigérant suffisant pour alimenter l'absorbeur et ainsi permettre un fonctionnement correct de l'absorption. Le second réservoir associé à l'absorbeur permet d'alimenter le concentrateur et donc de reconcentrer la solution absorbante saturée après absorption. Ces deux réservoirs jouent des rôles de pistons, car les niveaux de fluide qui sont disponibles dans leurs espaces internes respectifs montent et descendent en fonction de la puissance disponible. Par conséquent, ces réservoirs influencent considérablement la puissance qui est disponible pour induire le refroidissement du fluide du circuit de réfrigération et qui dépend notamment de leurs volumes.

Par ailleurs, la climatisation par absorption fonctionnant sous vide, on est contraint de porter une attention particulière à la connectique qui, aujourd'hui, assure l'interface entre chaque réservoir et la pompe associée, afin d'obtenir une étanchéité appropriée à ce vide et des pertes de charge minimales. Typiquement, le taux de fuite accepté au niveau de la connectique d'interfaçage est de l'ordre de 2*10⁻⁷ mbar, ce qui s'avère particulièrement difficile à obtenir sur une chaine d'assemblage ou dans un service après-vente, notamment lorsque l'encombrement du système comportant l'installation de climatisation par absorption est important, comme par exemple dans un véhicule automobile.

De plus, chaque pompe est actuellement placée sous le réservoir associé avec interposition d'une connectique spécifique, et ce réservoir est lui-même placé sous son équipement d'évaporation et/ou d'absorption, ce qui induit un encombrement vertical important qui nuit à leur intégration dans certains systèmes, comme par exemple dans certains véhicules (notamment ceux de type automobile).

Des exemples sont divulgués par les documents : FR 2951255, FR 2951256 et DE 3239426.

L'invention a donc notamment pour but d'améliorer la situation.

Elle propose à cet effet un dispositif de collection de liquide, destiné à équiper un équipement d'évaporation et/ou d'absorption d'une installation de climatisation, et comprenant, d'une part, un réservoir muni d'une première entrée, recevant du liquide issu de cet équipement d'évaporation et/ou d'absorption, et d'une première sortie, et, d'autre part, une pompe munie d'une deuxième entrée, couplée à cette première sortie afin d'aspirer du liquide contenu dans ce réservoir, et d'une deuxième sortie pour évacuer ce liquide selon un débit choisi.

Ce dispositif se caractérise par le fait que :
- sa pompe est solidarisée fixement au réservoir en ayant sa deuxième entrée communiquant directement avec la première sortie, et
- son réservoir comprend également un conduit au moins partiellement intégré comportant une troisième entrée, communiquant avec la deuxième sortie afin de recevoir le liquide évacué, et une troisième sortie, pour transférer ce dernier vers un équipement de l'installation de climatisation.

La pompe étant désormais directement solidarisée au réservoir, on s'affranchit de la connectique d'interfaçage réservoir/pompe, ce qui permet non seulement de réduire le taux de fuite, mais également de réduire de façon importante l'encombrement vertical.

Le dispositif selon l'invention peut comporter d'autres caractéristiques qui peuvent être prises séparément ou en combinaison, et notamment :
- dans un premier mode de réalisation la première entrée du réservoir peut être propre à être couplée à une sortie d'une partie qui est dédiée à l'absorption dans l'équipement d'évaporation et/ou d'absorption. Dans ce cas, la troisième sortie du conduit peut être propre à être couplée à une entrée d'un équipement de concentration de l'installation de climatisation ; 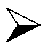 son réservoir peut comprendre dans une partie supérieure une quatrième sortie propre à être couplée à une entrée d'une autre pompe qui alimente une entrée de la partie dédiée à l'absorption ;
- dans un second mode de réalisation la première entrée du réservoir peut être propre à être couplée à une sortie d'une partie qui est dédiée à l'évaporation dans l'équipement d'absorption et/ou d'évaporation. Dans ce cas, la troisième sortie du conduit peut être propre à être couplée à une entrée de cette partie dédiée à l'évaporation ;
- sa pompe peut comprendre une embase dans laquelle sont définies la deuxième entrée et la deuxième sortie et solidarisée fixement par vissage à une paroi de couplage du réservoir, qui entoure la première sortie et dans laquelle est définie une partie au moins du conduit ;
- son réservoir peut comprendre une paroi latérale délimitant partiellement un espace interne de collection du liquide et munie d'un hublot permettant d'observer un niveau du liquide dans cet espace interne ;
- son réservoir peut être réalisé dans un matériau choisi parmi un alliage d'aluminium (comme par exemple AISiMgMn (également référencé 6360)), un matériau composite, et un matériau composite renforcé.

L'invention propose également une installation de climatisation par absorption comprenant un équipement d'évaporation et/ou d'absorption et au moins un dispositif de collection de liquide du type de celui présenté ci-avant et solidarisé fixement à cet équipement d'évaporation et/ou d'absorption.

Par exemple, cette installation peut comprendre des premier et second dispositifs de collection de liquide et son équipement d'évaporation et/ou d'absorption peut comprendre une partie dédiée à l'évaporation et à laquelle est solidarisé fixement le premier dispositif de collection de liquide, et une partie dédiée à l'absorption et à laquelle est solidarisé fixement le second dispositif de collection de liquide.

L'invention propose également un véhicule, éventuellement de type automobile, et comprenant une installation de climatisation du type de celle présentée ci-avant.

D'autres caractéristiques et avantages de l'invention apparaîtront à l'examen de la description détaillée ci-après, et des dessins annexés, sur lesquels :
- la figure 1 illustre schématiquement et fonctionnellement, un exemple d'installation de climatisation par absorption comprenant un équipement d'évaporation et d'absorption équipé de deux exemples de réalisation de dispositif de collection de liquide selon l'invention,
- la figure 2 illustre schématiquement, dans une vue en coupe, un exemple de réalisation d'un dispositif de collection de liquide selon l'invention, et
- la figure 3 illustre schématiquement, dans une vue en perspective, les éléments constituants le dispositif de collection de liquide de la figure 2, avant assemblage.

L'invention a notamment pour but de proposer un dispositif de collection de liquide DCj destiné à équiper un équipement d'évaporation et/ou d'absorption EE d'une installation de climatisation par absorption IC.

Dans ce qui suit, on considère, à titre d'exemple non limitatif, que l'installation de climatisation par absorption IC fait partie d'un véhicule automobile, comme par exemple une voiture. Mais l'invention n'est pas limitée à cette application. En effet, l'installation de climatisation par absorption IC peut faire partie de n'importe quel système comprenant au moins un espace à climatiser. Par conséquent, l'installation de climatisation par absorption IC peut faire partie de n'importe quel type de véhicule (terrestre, maritime (ou fluvial), ou aérien), d'une installation, éventuellement de type industriel, ou d'un bâtiment, par exemple.

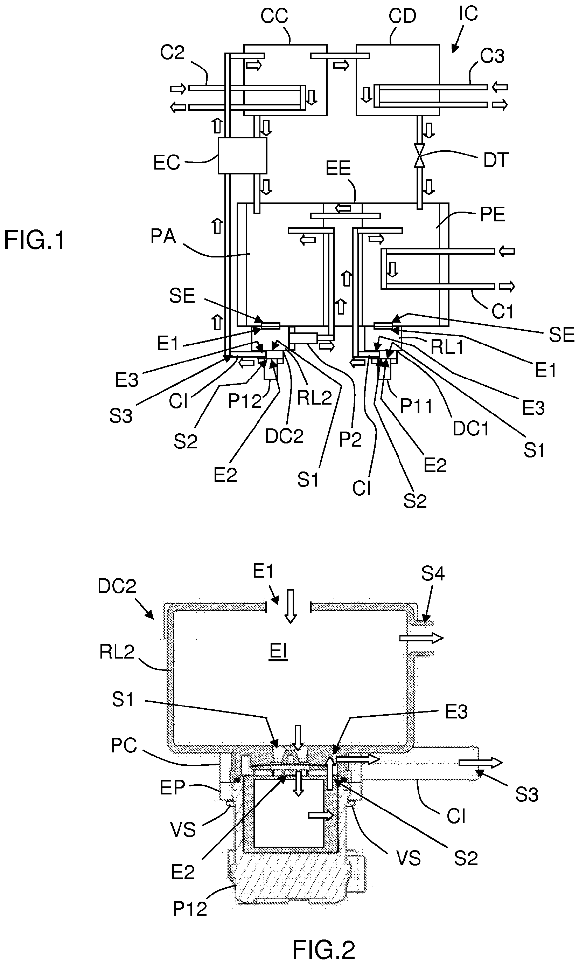

On a schématiquement représenté sur la figure 1 un exemple de d'installation de climatisation par absorption IC comprenant deux exemples de réalisation de dispositifs de collection de fluide DC selon l'invention.

Cette installation (de climatisation par absorption) IC comprend notamment un évaporateur PE, un absorbeur PA, un concentrateur (ou désorbeur) CC et un condenseur CD.

On notera que dans l'exemple non limitatif illustré sur la figure 1 l'évaporateur PE et l'absorbeur PA sont deux parties d'un équipement d'évaporation et d'absorption de type tout intégré. Mais dans une variante de réalisation non illustrée, l'évaporateur PE pourrait être un équipement d'évaporation et l'absorbeur PA pourrait être un équipement d'absorption séparé de l'équipement d'évaporation PE (bien que couplé à ce dernier (PE)).

L'évaporateur (ou la partie dédiée à l'évaporation) PE comprend un espace interne qui est parcouru par un circuit de réfrigération C1 dans lequel circule un fluide, comme par exemple de l'eau, et à l'intérieur duquel règne une très faible pression. Dans un véhicule, le circuit de réfrigération C1 est chargé de refroidir l'air qui doit alimenter au moins un habitacle.

Par ailleurs, un réfrigérant est pulvérisé dans un état liquide à l'intérieur de cet espace interne. A titre d'exemple, ce réfrigérant peut être de l'eau. Le réfrigérant liquide capte des calories au fluide qui circule dans le circuit de réfrigération C1 afin de le refroidir, ce qui induit son évaporation partielle. Une partie du réfrigérant liquide pulvérisé ne s'évapore pas et tombe dans le fond de l'évaporateur PE où elle est transférée par gravité dans un dispositif de collection de liquide DCj (ici j = 1, car dans la suite on l'appellera « premier dispositif de collection de liquide »).

Plus précisément, et comme illustré sur les figures 1 à 3, un dispositif de collection de liquide DCj, selon l'invention, comprend au moins un réservoir RLj et une pompe P1j solidarisés fixement et directement l'un à l'autre, comme on le verra plus loin.

Le premier réservoir RL1 du premier dispositif de collection de liquide DC1 comprend une première entrée E1, qui communique avec une sortie définie dans une partie inférieure de l'évaporateur PE afin de recevoir du liquide (ici du réfrigérant liquide), et une première sortie S1.

La première pompe P11 du premier dispositif de collection de liquide DC1 comprend une deuxième entrée E2, couplée à la première sortie S1 du premier réservoir RL1 afin d'aspirer du liquide contenu dans le premier réservoir RL1, et une deuxième sortie S2 pour évacuer le liquide (ici du réfrigérant liquide) selon un débit choisi.

Comme illustré sur les figures 1 et 2, la première pompe P11 est solidarisée fixement au premier réservoir RL1 en ayant sa deuxième entrée E2 qui communique directement avec la première sortie S1 du premier réservoir RL1.

Par ailleurs, le premier réservoir RL1 comprend également un conduit CI au moins partiellement intégré et comportant une troisième entrée E3, communiquant avec la deuxième sortie S2 de la première pompe P11 afin de recevoir le liquide (ici du réfrigérant liquide) évacué, et une troisième sortie S3, pour transférer ce dernier vers un équipement de l'installation IC (ici la partie d'évaporation PE de l'équipement d'évaporation et d'absorption EE).

Le premier réservoir RL1 est donc chargé de collecter dans son espace interne El du réfrigérant liquide qui est pompé (ou aspiré) par la première pompe P11 chargée de la réinjecter (sous forme pulvérisée) dans l'évaporateur PE. La vapeur de réfrigérant créée dans l'évaporateur PE est transférée dans l'espace interne d'un absorbeur (ou partie dédiée à l'absorption) PA de l'équipement d'évaporation et d'absorption EE.

Grâce à cette solidarisation directe de la pompe P1j au réservoir RLj associé, on s'affranchit de la connectique d'interfaçage réservoir/pompe de l'art antérieur. Il en résulte non seulement une réduction du taux de fuite qui réduit notablement les contraintes d'assemblage sur les chaines de montage et dans les services après-vente, mais également une réduction sensible de l'encombrement vertical du dispositif de collection de fluide DCj.

On notera que l'on peut envisager d'intercaler un échangeur de chaleur entre l'évaporateur PE et l'absorbeur PA afin de pré-refroidir la vapeur de réfrigérant.

L'absorbeur PA contient une solution absorbante, comme par exemple du bromure de lithium (LiBr), qui est chargée d'absorber la vapeur de réfrigérant formée dans l'évaporateur PE et permet ainsi de maintenir la très faible pression régnant dans ce dernier (PE), laquelle est nécessaire à la vaporisation du réfrigérant.

Plus la solution absorbante absorbe de la vapeur de réfrigérant, plus elle est diluée. Pour éviter qu'elle ne se sature, et donc qu'elle ne puisse plus absorber la vapeur de réfrigérant, elle est en partie transférée par gravité dans un dispositif de collection de liquide DCj (ici j = 2, car dans la suite on l'appellera « second dispositif de collection de liquide »). Ce second dispositif de collection de liquide DC2 est similaire au premier dispositif de collection de liquide DC1 décrit ci-avant, et donc comprend un second réservoir RL2 et une seconde pompe P12 solidarisés fixement et directement l'un à l'autre.

Le second réservoir RL2 du second dispositif de collection de liquide DC2 comprend une première entrée E1, qui communique avec une sortie définie dans une partie inférieure de l'absorbeur PA afin de recevoir du liquide (ici de la solution absorbante), et une première sortie S1.

La seconde pompe P12 du second dispositif de collection de liquide DC2 comprend une deuxième entrée E2, couplée à la première sortie S1 du second réservoir RL2 afin d'aspirer du liquide contenu dans le second réservoir RL2, et une deuxième sortie S2 pour évacuer le liquide (ici de la solution absorbante) selon un débit choisi.

Comme illustré sur la figure 2, la seconde pompe P12 est solidarisée fixement au second réservoir RL2 en ayant sa deuxième entrée E2 qui communique directement avec la première sortie S1 du second réservoir RL2.

Par ailleurs, le second réservoir RL2 comprend également un conduit CI au moins partiellement intégré et comportant une troisième entrée E3, communiquant avec la deuxième sortie S2 de la première pompe P11 afin de recevoir le liquide (ici de la solution absorbante) évacué, et une troisième sortie S3, pour transférer ce dernier vers un équipement de l'installation IC, ici le concentrateur CC.

Le second réservoir RL2 est donc chargé de collecter dans son espace interne El de la solution absorbante qui est pompée (ou aspirée) par la seconde pompe P12 chargée de l'injecter dans la partie supérieure de l'espace interne du concentrateur CC.

De préférence, et comme illustré non limitativement sur les figures 1 à 3, le second réservoir RL2 peut également comprendre dans une partie supérieure une quatrième sortie S4 qui est propre à être couplée à une entrée d'une autre pompe P2 qui alimente une entrée de l'absorbeur PA. Ainsi, une partie de la solution absorbante contenue dans l'absorbeur PA est pompée (ou aspirée) par cette autre pompe qui la réinjecte (de préférence sous une forme pulvérisée) dans la partie supérieure de l'absorbeur PA.

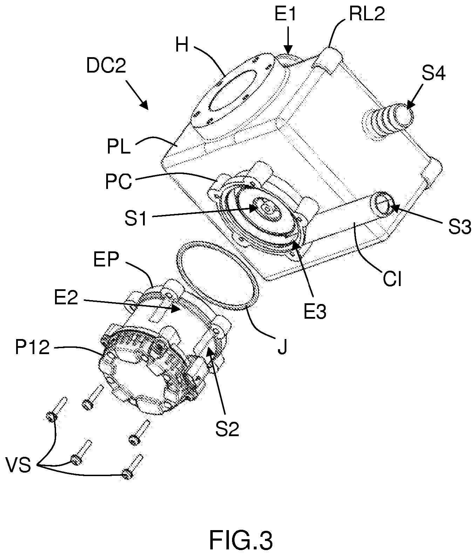

On notera, comme illustré non limitativement sur les figures 2 et 3, que chaque pompe P1j peut comprendre une embase EP dans laquelle sont définies la deuxième entrée E2 et la deuxième sortie S2 et qui est solidarisée fixement par vissage à une paroi de couplage PC du réservoir RLj associé, laquelle entoure la première sortie S1 et dans laquelle est définie une partie au moins du conduit CI. Par exemple, on peut utiliser cinq vis pour assurer une solidarisation homogène de l'embase EP de la pompe P1j à la paroi de couplage PC du réservoir RLj associé, de nature à garantir un taux de fuite compatible avec l'étanchéité appropriée au vide recherché.

Une partie du conduit CI peut ainsi être avantageusement définie (et donc intégrée) dans cette paroi de couplage PC, et notamment la troisième sortie S3. En outre, la définition de la deuxième sortie S2 dans l'embase EP permet à cette dernière (S2) d'être positionnée au plus près de la troisième entrée E3 du conduit CI, et donc de communiquer quasiment directement avec cette deuxième sortie S2, sans qu'il faille prévoir un autre conduit de liaison.

On notera également, comme illustré non limitativement sur la figure 3, qu'afin d'améliorer l'étanchéité de la liaison directe entre chaque pompe P1j et le réservoir RLj associé, il est avantageux d'intercaler un joint J, par exemple torique, entre le bord d'appui libre de la paroi de couplage PC, et la face d'appui de l'embase EP.

On notera également, comme illustré non limitativement sur la figure 3, que chaque réservoir RLj peut comprendre une paroi latérale PL qui délimite partiellement l'espace interne El de collection du liquide et qui est munie d'un hublot H permettant d'observer le niveau du liquide dans cet espace interne El. Un tel hublot H permet avantageusement de surveiller le niveau du liquide, afin de procéder à une remise à niveau dans un service après-vente lorsque ce niveau est inférieur à un seuil prédéfini.

On notera également que chaque réservoir RLj peut être réalisé dans un matériau choisi parmi un alliage d'aluminium, comme par exemple AISiMgMn (également référencé 6360), un matériau composite, et un matériau composite renforcé.

L'espace interne du concentrateur CC est parcouru par un circuit de chauffage C2 dans lequel circule un fluide chaud, comme par exemple de l'eau, qui est chargé de réchauffer la solution absorbante partiellement saturée qui provient de l'absorbeur PA. Ce réchauffage provoque une évaporation d'une partie du réfrigérant contenue dans la solution absorbante, ce qui induit la régénération de cette dernière.

Dans un véhicule, le circuit de chauffage C2 peut, par exemple, être une partie du circuit de refroidissement d'un moteur thermique. Cette partie est de préférence située en aval du moteur thermique.

La solution absorbante régénérée est ensuite transférée vers la partie supérieure de l'espace interne de l'absorbeur PA, tandis que la vapeur de réfrigérant produite dans le concentrateur CC est transférée dans l'espace interne du condenseur CD.

On notera, comme illustré non limitativement sur la figure 1, que l'on peut envisager d'intercaler un échangeur de chaleur, par exemple à plaques et de type liquide/liquide, entre l'absorbeur PA et le concentrateur CC, sur le trajet de la solution absorbante saturée et sur le trajet de la solution absorbante régénérée. Ainsi, la solution absorbante régénérée qui sort du concentrateur CC et qui retourne vers l'absorbeur PA préchauffe la solution absorbante saturée qui va vers le concentrateur CC pour y être régénérée, ce qui permet d'économiser une partie de l'énergie nécessaire à son chauffage dans le concentrateur CC.

L'espace interne du condenseur CD comprend un circuit de refroidissement C3 chargé de refroidir la vapeur de réfrigérant pour reformer le réfrigérant liquide. Ce dernier est ensuite transféré dans l'évaporateur PE, de préférence après passage dans un détendeur DT et éventuellement un échangeur de chaleur placé en amont du détendeur DT.

## Revendications

1. Dispositif de collection de liquide (DCj) pour un équipement d'évaporation et/ou d'absorption (EE) d'une installation de climatisation (IC), ledit dispositif (DC) comprenant i) un réservoir (RLj) muni d'une première entrée (E1), recevant du liquide issu dudit équipement d'évaporation et/ou d'absorption (EE), et d'une première sortie (S1), et ii) une pompe (P1j) munie d'une deuxième entrée (E2), couplée à ladite première sortie (S1) afin d'aspirer du liquide contenu dans ledit réservoir (RLj), et d'une deuxième sortie (S2) pour évacuer ledit liquide selon un débit choisi, **caractérisé en ce que** ladite pompe (P1j) est solidarisée fixement audit réservoir (RLj) en ayant sa deuxième entrée (E2) communiquant directement avec ladite première sortie (S1), et **en ce que** ledit réservoir (RLj) comprend en outre un conduit (CI) au moins partiellement intégré et comportant une troisième entrée (E3), communiquant avec ladite deuxième sortie (S2) afin de recevoir ledit liquide évacué, et une troisième sortie (S3), pour transférer ce dernier vers un équipement (EE, CC) de ladite installation de climatisation (IC).

2. Dispositif selon la revendication 1, **caractérisé en ce que** ladite première entrée (E1) est propre à être couplée à une sortie d'une partie (PA) dédiée à l'absorption dans ledit équipement d'évaporation et/ou d'absorption (EE), et **en ce que** ladite troisième sortie (S3) est propre à être couplée à une entrée d'un équipement de concentration (CC) de ladite installation de climatisation (IC).

3. Dispositif selon la revendication 2, **caractérisé en ce que** ledit réservoir (RLj) comprend dans une partie supérieure une quatrième sortie (S4) propre à être couplée à une entrée d'une autre pompe (P2) alimentant une entrée de ladite partie (PA) dédiée à l'absorption.

4. Dispositif selon la revendication 1, **caractérisé en ce que** ladite première entrée (E1) est propre à être couplée à une sortie d'une partie (PE) dédiée à l'évaporation dans ledit équipement d'évaporation et/ou d'absorption (EE), et **en ce que** ladite troisième sortie (S3) est propre à être couplée à une entrée de ladite partie (PE) dédiée à l'évaporation.

5. Dispositif selon l'une des revendications 1 à 4, **caractérisé en ce que** ladite pompe (P1j) comprend une embase (EP) dans laquelle sont définies ladite deuxième entrée (E2) et ladite deuxième sortie (S2) et solidarisée fixement par vissage à une paroi de couplage (PC) dudit réservoir (RLj), qui entoure ladite première sortie (S1) et dans laquelle est définie une partie au moins dudit conduit (CI).

6. Dispositif selon l'une des revendications 1 à 5, **caractérisé en ce que** ledit réservoir (RLj) comprend une paroi latérale (PL) délimitant partiellement un espace interne (EI) de collection dudit liquide et munie d'un hublot (H) permettant d'observer un niveau dudit liquide dans ledit espace interne (EI).

7. Dispositif selon l'une des revendications 1 à 6, **caractérisé en ce que** ledit réservoir (RLj) est réalisé dans un matériau choisi parmi un alliage d'aluminium, un matériau composite, et un matériau composite renforcé.

8. Installation de climatisation (IC) comprenant un équipement d'évaporation et/ou d'absorption (EE), **caractérisée en ce qu'**elle comprend en outre au moins un dispositif de collection de liquide (DCj) selon l'une des revendications précédentes, solidarisé fixement audit équipement d'évaporation et/ou d'absorption (EE).

9. Installation selon la revendication 8, **caractérisée en ce qu'**elle comprend des premier (DC1) et second (DC2) dispositifs de collection de liquide, et **en ce que** ledit équipement d'évaporation et/ou d'absorption (EE) comprend une partie (PE) dédiée à l'évaporation et à laquelle est solidarisé fixement ledit premier dispositif de collection de liquide (DC1), et une partie (PA) dédiée à l'absorption et à laquelle est solidarisé fixement ledit second dispositif de collection de liquide (DC2).

10. Véhicule, **caractérisé en ce qu'**il comprend une installation de climatisation (IC) selon l'une des revendications 8 et 9.

## Patentansprüche

1. Flüssigkeitssammelvorrichtung (DCj) für eine Verdampfungs- und/oder Absorptionseinrichtung (EEE) einer Klimaanlage (IIC), wobei die Einrichtung (DC) i) einen Behälter (RLj) mit einem ersten Einlass (E1), der Flüssigkeit aus der Verdampfungs- und/oder Absorptionseinrichtung (EEE) aufnimmt, und einen ersten Behälter umfasst (S1) und ii) eine Pumpe (P1j) mit einem zweiten Einlass (E2), der mit dem ersten Auslass (S1) gekoppelt ist, um Flüssigkeit aus dem Behälter (RLj) zu saugen, und einem zweiten Auslass (S2) zum Ablassen der Flüssigkeit mit einem ausgewählten Durchfluss, **dadurch gekennzeichnet, dass** die Pumpe (P1j) fest mit dem Behälter verbunden ist (RM j) mit seinem zweiten Einlass (E2), der direkt mit dem ersten Auslass (S1) in Verbindung steht, und wobei der Behälter (RLj) ferner eine zumindest teilweise integrierte Leitung (CI) mit einem dritten Einlass (E3), der mit dem zweiten Auslass (S2) in Verbindung steht, um die abgegebene Flüssigkeit aufzunehmen, und einem dritten Auslass (S3) umfasst, um diesen zu übertragen eine Ausrüstung (EEE, CC) der Klimaanlage (IIC).

2. Vorrichtung nach Anspruch 1, **dadurch gekennzeichnet, dass** der erste Einlass (E1) mit einem Auslass eines Teils (PA) gekoppelt ist, der der Absorption in der Verdampfungs- und/oder Absorptionseinrichtung (EEE) dient, und dass der dritte Auslass (S3) mit einem Eingang einer Konzentrationsanlage (CC) der Klimaanlage (IIC) gekoppelt werden kann (1)

3. Vorrichtung nach Anspruch 2, **dadurch gekennzeichnet, dass** der Behälter (RLj) in einem oberen Teil einen vierten Auslass (S4) aufweist, der mit einem Einlass einer anderen Pumpe (P2) gekoppelt werden kann, die einen Einlass des Absorptionsteils (PA) speist.

4. Vorrichtung nach Anspruch 1, **dadurch gekennzeichnet, dass** der erste Einlass (E1) mit einem Auslass eines Teils (PE), der der Verdampfung in der Verdampfungs- und/oder Absorptionseinrichtung (EEE) zugeordnet ist, gekoppelt werden kann, und dass der dritte Auslass (S3) mit einem Eingang des Teils (EPE), der der Verdampfung zugeordnet ist, gekoppelt werden kann.

5. Vorrichtung nach einem der Ansprüche 1 bis 4, **dadurch gekennzeichnet, dass** die Pumpe (P1j) eine Basis (EP) aufweist, in der der zweite Einlass (E2) und der zweite Auslass (S2) definiert sind und fest mit einer Kopplungswand (PC) des Behälters (RLj) verschraubt ist, die den ersten Auslass (S1) umgibt und in der ein Teil am Teil definiert ist weniger des Kanals (CI).

6. Vorrichtung nach einem der Ansprüche 1 bis 5, **dadurch gekennzeichnet, dass** das Reservoir (RLj) eine Seitenwand (PL) umfasst, die teilweise einen Innenraum (EI) zur Sammlung der Flüssigkeit begrenzt und mit einem Fenster (H) versehen ist, das es ermöglicht, einen Pegel der Flüssigkeit in dem Innenraum (EI) zu beobachten.

7. Vorrichtung nach einem der Ansprüche 1 bis 6, **dadurch gekennzeichnet, dass** der Behälter (RLj) aus einem Material hergestellt ist, das aus einer Aluminiumlegierung, einem Verbundmaterial und einem verstärkten Verbundmaterial ausgewählt ist.

8. Klimaanlage (IC) mit einer Verdampfungs- und/oder Absorptionseinrichtung (EEE), **dadurch gekennzeichnet, dass** sie ferner mindestens eine Flüssigkeitssammeleinrichtung (DCj) nach einem der vorhergehenden Ansprüche umfasst, die fest mit der Verdampfungs- und/oder Absorptionseinrichtung (EEE) verbunden ist.

9. Anlage nach Anspruch 8, **dadurch gekennzeichnet, dass** sie erste (DC1) und zweite (DC2) Flüssigkeitssammeleinrichtungen umfasst, und dass die Verdampfungs- und/oder Absorptionseinrichtung (EEE) einen Teil (PE) umfasst, der zur Verdampfung bestimmt ist und mit dem die erste Flüssigkeitssammeleinrichtung (DC1) fest verbunden ist, und einen Teil (PAA) zur Absorption bestimmt und fest mit der zweiten Flüssigkeitssammeleinrichtung (DC2) verbunden ist.

10. Fahrzeug, **dadurch gekennzeichnet, dass** es eine Klimaanlage (IIC) nach einem der Ansprüche 8 und 9 umfasst.

## Claims

1. Liquid collection device (DCj) for evaporation and/or absorption equipment (EE) of an air conditioning system (IC), that device (DC) consisting of (i) a tank (RLj) equipped with an initial inlet (E1), receiving liquid from the said evaporation and/or absorption equipment (EE), and an initial outlet (S1), and (ii) a pump (e) P1j) fitted with a second inlet (E2), coupled with the said first outlet (S1) to suck liquid contained in the said tank (RLj), and a second outlet (S2) to evacuate the said liquid at a selected flow rate, **characterized by** the fact that the said pump (P1j) is bound together with the reservoir (RLj) having its second inlet (E2) communicating directly with the said first outlet (S1), and in so far as the said tank (RLj) also includes at least a partially integrated duct (CI) with a third inlet (E3), communicating with the said second outlet (S2) in order to receive the evacuated liquid, and a third outlet (S3), to transfer the latter to an equipment (EE, CC) of the said air conditioning system (IC).

2. A device according to Claim 1, characterized as the said first entry (E1) is suitable to be coupled to an exit of a part (PA) dedicated to absorption in the said evaporation and/or absorption equipment (EE), and as the said third entry (S3) is suitable to be coupled to an entry of a concentration equipment (CC) of the said air conditioning system (IC).

3. A device in accordance with Claim 2, characterized as the said tank (RLj) includes in a higher part a fourth outlet (S4) suitable to be coupled to an inlet of another pump (P2) supplying an input of that absorption part (PA).

4. A device according to Claim 1, characterized as the said first entry (E1) is suitable to be coupled to an exit of a part (PE) dedicated to evaporation in the said evaporation and/or absorption equipment (EE), and as the said third entry (S3) is suitable to be coupled to an entry of that part (PE) dedicated to evaporation.

5. A device according to one of the claims 1 to 4, **characterized in that** the said pump (P1j) includes a base (EP) in which the said second inlet (E2) and the said second outlet (S2) are defined and connected by screw fastening to a coupling wall (PC) of the said reservoir (RLj), which surrounds the said first outlet (S1) and in which at least part of the said duct (CI) are defined.

6. A device according to one of the claims 1 to 5, **characterized by** the fact that the said tank (RLj) includes a lateral wall (PL) partially delimiting an internal space (EI) of the collection of the said liquid and equipped with a porthole (H) to observe a level of the said liquid in the said internal space (EI).

7. A device according to one of the claims 1 to 6, **characterized by** the fact that the said tank (RLj) is made of a material chosen from an aluminum alloy, a composite material, and a reinforced composite material.

8. Air conditioning system (IC) consisting of evaporation and/or absorption equipment (EE), **characterized in that** it also includes at least one liquid collection device (DCj) according to one of the preceding claims, which is linked together with the equipment for evaporation and/or absorption (EE).

9. Installation according to Claim 8, characterized as it includes the first (DC1) and second (DC2) liquid collection devices, and as the said evaporation and/or absorption (EE) equipment includes a part (PE) dedicated to evaporation, to which is attached the said first liquid collection device (DC1), and a part (PA) dedicated to absorption and to which is attached secured the said second liquid collection device (DC2).

10. Vehicle, characterized as it includes an air conditioning system (IC) according to one of Claims 8 and 9.
